# EUROPEAN PATENT APPLICATION

(11) **EP 4 492 767 A1**
(43) Date of publication of application: **15.01.2025**
(21) Application number: 23765883.6
(22) Date of filing: 02.03.2023
(51) Int. Cl.: H04N 5/262, G06F 3/0484, G06F 3/0488

(54) **SPECIAL EFFECT VIDEO GENERATING METHOD AND APPARATUS, ELECTRONIC DEVICE, AND STORAGE MEDIUM**

(30) Priority: 11.03.2022 CN 202210239631
(71) Applicant: Beijing Zitiao Network Technology Co., Ltd., Beijing 100190 (CN)
(72) Inventor: CHEN, Jiajun, Beijing 100086 (CN)
(74) Representative: Dentons UK and Middle East LLP
(86) International application number: PCT/CN2023/079372
(87) International publication number: WO 2023/169305

(57) **Abstract**

Embodiments of the present disclosure provide a special effect video generating method and apparatus, an electronic device, and a storage medium. The method comprises: obtaining a target upload image in response to a special effect triggering operation (S 1 10); monitoring a contact movement trajectory of a target contact in a display interface, and processing the target upload image on the basis of the contact movement trajectory, so as to determine a special effect superimposed image (S120); and using the special effect superimposed image as a foreground image, using a collected original image as a background image, and determining a target special effect video (S130).

## Description

This application claims the priority to Chinese Patent Application No. 202210239631.3, filed with the Chinese Patent Office on March 11, 2022, the entire disclosure of which is incorporated herein by reference as part of the disclosure of this application.

### TECHNICAL FIELD

Embodiments of the present disclosure relate to a field of image processing technology, for example, relate to an effect video generating method, an effect video generating apparatus, an electronic device, and a storage medium.

### BACKGROUND

With the development of network technology, more and more applications have entered lives of users, especially a series of software that may film short videos, which are deeply loved by the users.

In order to enhance fun of video filming, software developers may develop a variety of effect props. However, the number of effect props currently developed is very limited, and richness of video content needs to be further improved. Especially, when multiple images are superimposed for display, the effects of related technologies may have certain limitations and cannot meet the needs of users.

### SUMMARY

The embodiments of the present disclosure provide an effect video generating method, an effect video generating apparatus, an electronic device, and a storage medium, which can generate a unique effect image based on a trigger operation by the user on the display interface in the process of displaying the effect image, thereby not only improving the richness of the display interface content, but also improving the visual experience and interactivity.

In a first aspect, the embodiments of the present disclosure provide an effect video generating method, and the method includes:
obtaining a target uploaded image in response to an effect trigger operation;
monitoring a contact motion track of a target contact on a display interface, and processing the target uploaded image based on the contact motion track to determine an effect superimposed image; and
taking the effect superimposed image as a foreground image and taking a collected original image as a background image, so as to determine a target effect video.

In a second aspect, the embodiments of the present disclosure further provide an effect video generating apparatus, and the apparatus includes:
a target uploaded image acquisition module, configured to obtain a target uploaded image in response to an effect trigger operation;
an effect superimposed image determining module, configured to monitor a contact motion track of a target contact on a display interface, and process the target uploaded image based on the contact motion track to determine an effect superimposed image; and
a target effect video display module, configured to take the effect superimposed image as a foreground image and take a collected original image as a background image, so as to determine a target effect video.

In a third aspect, the embodiments of the present disclosure further provide an electronic device, and the electronic device includes:
one or more processors; and
a storage apparatus, configured to store one or more programs,
wherein the one or more programs, when executed by the one or more processors, cause the one or more processors to implement the effect video generating method according to any one of the embodiments of the present disclosure.

In a fourth aspect, the embodiments of the present disclosure further provide a storage medium comprising computer-executable instructions, and the computer-executable instructions, when executed by a computer processor, are configured to execute the effect video generating method according to any one of the embodiments of the present disclosure.

### BRIEF DESCRIPTION OF DRAWINGS

Throughout the accompanying drawings, identical or similar reference signs represent identical or similar elements. It should be understood that, the accompanying drawings are schematic, and components and elements may not be necessarily drawn to scale.
Fig. 1 is a flowchart of an effect video generating method provided by an embodiment of the present disclosure;
Fig. 2 is a schematic diagram of a current application display interface provided by an embodiment of the present disclosure;
Fig. 3 is a flowchart of an effect video generating method provided by another embodiment of the present disclosure;
Fig. 4 is a schematic diagram of a current display interface provided by another embodiment of the present disclosure;
Fig. 5 is a flowchart of an effect video generating method provided by still another embodiment of the present disclosure;
Fig. 6 is a flowchart of an effect video generating method provided by further still another embodiment of the present disclosure;
Fig. 7 is a structural block diagram of an effect video generating apparatus provided by an embodiment of the present disclosure; and
Fig. 8 is a schematic structural diagram of an electronic device provided by an embodiment of the present disclosure.

### DETAILED DESCRIPTION

It should be understood that various steps described in the method implementations of the present disclosure may be performed according to different orders and/or in parallel. Furthermore, the method implementations may include additional steps and/or omit performing the illustrated steps. The scope of the present disclosure is not limited in this aspect.

As used herein, the terms "include," "comprise," and variations thereof are openended inclusions, i.e., "including but not limited to." The term "based on" is "based, at least in part, on." The term "an embodiment" represents "at least one embodiment," the term "another embodiment" represents "at least one additional embodiment," and the term "some embodiments" represents "at least some embodiments." Relevant definitions of other terms will be given in the description below.

It should be noted that concepts such as the "first," "second," or the like mentioned in the present disclosure are only used to distinguish different devices, modules or units, and are not used to limit the interdependence relationship or the order of functions performed by these devices, modules or units.

It should be noted that the modifications of "a," "an," "a plurality of," and the like mentioned in the present disclosure are illustrative rather than restrictive, and those skilled in the art should understand that unless the context clearly indicates otherwise, these modifications should be understood as "one or more."

Before introducing the technical solution, application scenarios may be exemplarily illustrated at first. The technical solution disclosed by the present disclosure may be applied to any scenario where an effect video needs to be generated. For example, the technical solution may be applied in the process of video filming to display the effect on an image corresponding to the captured user, such as in a short video filming scenario.

In this embodiment, when a user uses corresponding video filming or making software, the user usually wants to display effects in a desired way, which can be achieved based on the technical solution of the embodiments of the present disclosure. For example, according to the contact motion track on the display interface, the final effect display image is determined.

That is to say, the superimposed image content on the display interface may be determined according to the contact motion track on the display interface, thereby superimposing the corresponding effect content on the basis of the original video, so that the effect content can be customized.

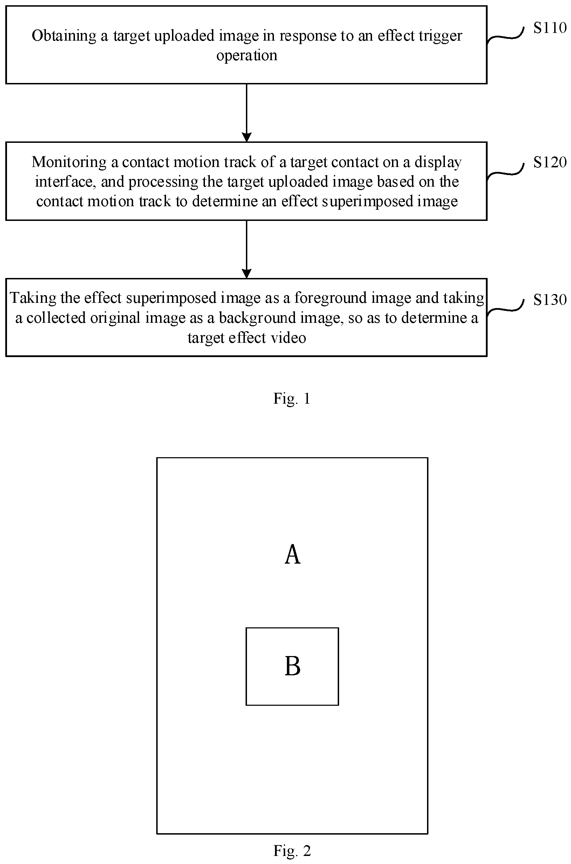

Fig. 1 is a flowchart of an effect video generating method provided by an embodiment of the present disclosure. This embodiment can be applied to the case of performing effect processing on an image on the display interface in any image display scenario supported by the Internet. This method can be implemented by an effect video generating apparatus, which can be implemented in the form of software and/or hardware. The hardware may be an electronic device, such as a mobile terminal, a PC terminal, a server, or the like. Any image display scenario is usually realized by the cooperation of the client and the server, and the method provided by this embodiment can be executed by the server, the client, or cooperation of the client and the server.

As illustrated in Fig. 1, the method of this embodiment includes:
S 110: obtaining a target uploaded image in response to an effect trigger operation.

Here the apparatus for executing the effect video generating method provided by the embodiments of the present disclosure may be integrated into application software that supports an effect video generating function, and the software may be installed in an electronic device. For example, the electronic device may be a mobile terminal, a PC terminal, or the like. The application software may be a type of software that processes images/videos, and here will not go into details about specific application software, as long as image/video processing can be achieved. The application software may also be a specially developed application in software that can add effects and display the effect video, or the application software may also be integrated into a corresponding page, so that the user can achieve effect adding processing through the integrated page on the PC terminal.

Here the target uploaded image may be an image to be superimposed and displayed, which is selected by the user according to personal needs. It can be understood that the target uploaded image may be a picture pre-stored in the storage device of the mobile terminal, a picture taken in real time by an application calling the camera of the mobile terminal based on a trigger operation of the user, or an image selected from an album as the target uploaded image by calling the photo album program on the terminal device.

For example, when the user triggers a target application and triggers an effect control on the display interface, an effect display panel may be displayed, so as to select an effect to be used from the effect display panel. If the effect props provided by the embodiments of the present disclosure are selected, a corresponding effect video can be made based on the method provided by the embodiments of the present disclosure. After the effect is selected, the image selected from the album or the image captured based on the camera can be obtained to serve as the target uploaded image.

On the basis of the above-described technical solution, obtaining the target uploaded image in response to the effect trigger operation includes: displaying an uploaded image box in response to the effect trigger operation; and displaying at least one image to be uploaded based on a trigger operation for the uploaded image box, and determining the target uploaded image based on a trigger operation for the at least one image to be uploaded.

Here the uploaded image box may be understood as an interactive region for uploading images. After the user selects the effect props, the user may shoot the corresponding video image based on the camera, and at the same time, a corresponding "+" sign and an uploaded image box may be displayed at the preset position of the display interface. The image to be uploaded may be a plurality of images displayed on the display interface which are based on the user triggering the uploaded image box.

For example, when the user triggers a corresponding effect on the display interface of the application, an uploaded image box may be displayed on the display interface, and if the user triggers the uploaded image box, it may jump to the photo album system to display a plurality of images displayed in the photo album system as images to be uploaded. Alternatively, if the user triggers the uploaded image box, the camera may be started to shoot at least one image to be uploaded. Fig. 2 is a schematic diagram of a current application display interface provided by an embodiment of the present disclosure. As shown in Fig. 2, the region A is the current application display interface, and the region B is the uploaded image box. Generally, the uploaded image box is a rectangular region with a preset size, and the user can zoom in and zoom out the rectangular box by dragging the vertex of the image box, or may also adjust the size of the image box by a two-finger operation. For example, when the user clicks on the inner region of the uploaded image box, the application calls the image management program installed in the terminal device according to the preset method, for example, calling the related programs such as an image library, so that the images stored in the terminal device can be displayed on the display interface of the terminal device, and the user can select the target uploaded image from the displayed images to be uploaded as required. It can be understood that if the image as required by the user does not exist in the images stored in the current device, the user may also call the camera in the device by the application to take a real-time photo through the camera, or the application may provide the user with a corresponding online material display page according to a preset method, so that the user can select the target uploaded image on the material display page.

S 120: monitoring a contact motion track of a target contact on a display interface, and processing the target uploaded image based on the contact motion track to determine an effect superimposed image.

Here the display interface may be a video playing interface. The target contact may be a physical point or a virtual point. For example, the physical point may be a corresponding pressing point when a finger presses the display interface. The virtual point can be understood as: the video is captured in real time, the key point information of the target interactive subject (such as the nose tip) in the camera image can be obtained, and the key point is taken as the target contact. Correspondingly, the contact motion track may be a track generated based on the movement information of the pressing point, and the movement track is taken as the contact motion track. It may also be a track determined according to the movement information of the key point (e.g., nose tip) relative to the display interface. The effect superimposed image may be understood as an image that needs to be displayed on the display interface after the target uploaded image is processed based on the contact motion track.

On the basis of the above-described technical solution, before monitoring the contact motion track of the target contact on the display interface, the method further includes: determining a contact type of the target contact on the display interface based on a capturing mode, so as to determine the contact motion track on the display interface based on the contact type, wherein the contact type includes a physical contact type or a virtual contact type.

Here the capturing mode can be understood as the video shooting mode selected by the user. For example, the terminal device held by the user may have a front camera and a rear camera. When the user shoots with the front camera, the user can see the display interface during shooting, and the user can directly set the contact motion track on the display interface. However, when the user shoots with the rear camera, the user cannot directly set the contact motion track on the display interface, and therefore different contact types need to be determined according to the different capturing modes selected by the user. The physical contact type may be a contact directly set on the display interface or a contact determined by the trigger operation of the user on the display interface. For example, the touch point of a finger on the display interface is a contact. The virtual contact type can be understood as the movement information of the key point displayed on the display interface, for example, it may be the palm, nose tip or other key points of the user.

For example, after the target uploaded image is uploaded, the display interface may be pressed by a finger, and the finger contact is used as the target contact. It should be noted that after uploading the target image, the user can continue to shoot the corresponding video content. The finger of the user can move freely on the display interface, and the contact motion track of the finger contact (target contact) on the display interface can be recorded, so as to determine the effect superimposed image based on this contact motion track. Alternatively, the contact control may be popped up, and the contact motion track is determined by dragging the contact control to move, and the target uploaded image is processed according to the obtained contact motion track, which may be as follows: determining the display content of the target uploaded image according to the contact motion track, for example, determining the corresponding connected domain according to the contact motion track, and displaying the significant content in the target uploaded image on the connected domain. The significant content may be the content that is first reflected in the user's eyes on the display interface. Alternatively, the size of the target uploaded image is consistent with the display interface, the target contact is understood as an eraser, and the contact motion track can be understood as erasing the content in the original video, displaying the content corresponding to the contact motion track in the target uploaded image, and taking this content as the effect superimposed image.

In the present technical solution, the contact motion track is determined based on a movement of a physical contact, and monitoring the contact motion track of the target contact on the display interface includes: determining the target contact, and tracking movement information of the target contact on the display interface, and determining the contact motion track.

Here the motion information can be understood as the motion track information of the target contact on the display interface, for example, the movement information of the finger on the display interface may serve as the movement information.

The determination of the target contact can detect the movement of contact information in real time, so as to update the effect content of the display interface to enable the user to set the effect picture.

S 130: taking the effect superimposed image as a foreground image and taking a collected original image as a background image, so as to determine a target effect video.

Here the foreground image can be understood as the image displayed in the upper image layer with respect to the current display interface, and correspondingly, the background image can be understood as the image displayed in the lower image layer with respect to the current display interface. The upper layer and the lower layer are relative. It should be noted that, in the process of determining the contact motion track of the user, the corresponding video is shot in real time based on the camera, and each picture captured at this time is taken as the original image.

For example, after the effect superimposed image is determined, the original image captured in real time is taken as the background image, and the effect superimposed image is displayed on the upper layer with respect to the original image, wherein the content of the effect superimposed image is consistent with the contact motion track. Based on the above method, the effect video can be dynamically generated and the target effect video can be obtained.

According to the technical solution of this embodiment, by responding to the effect trigger operation, the target uploaded image is obtained, the contact motion track of the target contact on the display interface is monitored according to the preset method, and the target uploaded image is processed based on the contact motion track to determine the effect superimposed image. After the effect superimposed image is determined, the effect superimposed image is used as the foreground image and the collected original image is used as the background image to determine the target effect video, so that the corresponding effect image can be displayed according to the operation of the user, thereby improving the richness of image display content and the interactivity with the user.

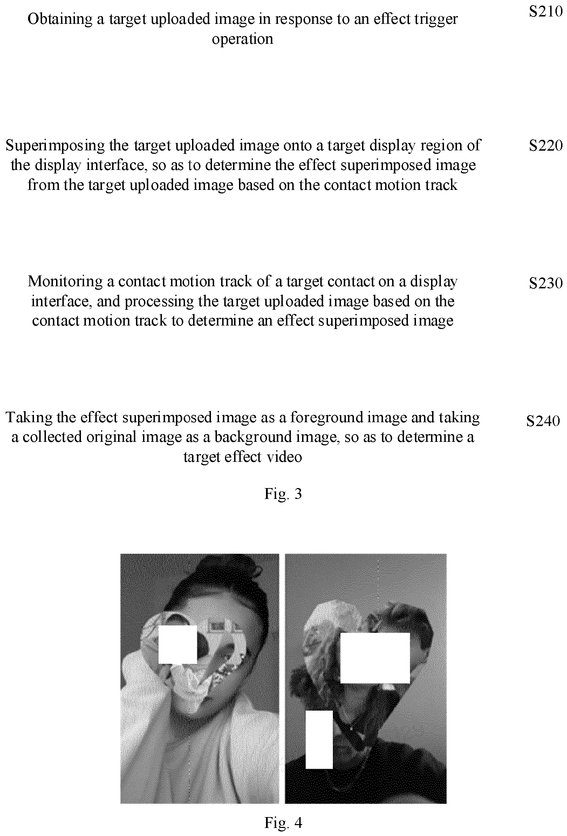

Fig. 3 is a flowchart of an effect video generating method provided by another embodiment of the present disclosure. On the basis of the aforementioned embodiments, the corresponding steps are refined, and the implementations can be referred to the technical solution of this embodiment. For example, technical terms that are the same as or corresponding to those in the above embodiments are not repeated here.

As shown in Fig. 3, the method specifically includes the following steps.

S210: obtaining a target uploaded image in response to an effect trigger operation.

S220: superimposing the target uploaded image onto a target display region of the display interface, so as to determine the effect superimposed image from the target uploaded image based on the contact motion track.

Here the display interface is the display interface of the terminal device, and the target display region is to display the corresponding video content, or the target display region is a partial region on the display interface, and the size of the region is consistent with the size of the uploaded image box. The display size of the target display region can be determined by operations such as zooming in or zooming out through two fingers.

For example, after the target uploaded image is obtained, the target display region can be determined according to the display size and position of the image uploaded box. The target uploaded image can be superimposed on the target display region, so that the effect image to be superimposed can be displayed when the contact motion track passes through the target display region.

In this embodiment, superimposing the target uploaded image onto the target display region of the display interface includes: superimposing the target uploaded image onto the target display region of the display interface according to preset transparency.

Here the preset transparency can be understood as the visibility of the target uploaded image in the target display region. It can be understood that when the transparency is set to 100, the target uploaded image is completely transparent at this time, that is, the target uploaded image is invisible on the display interface. When the transparency is set to zero, the target uploaded image is visible on the display interface, and therefore different transparency may correspond to different visibility, and the visibility of the target uploaded image can be controlled by adjusting the transparency. In this technical solution, after the target uploaded image is uploaded for the first time, the transparency of the target uploaded image may be set to 100%, that is, the target uploaded image is invisible.

On the basis of the above technical solution, after superimposing the target uploaded image onto the target display region according to the preset transparency, determining the effect superimposed image can be as follows: taking a track region corresponding to the contact motion track in the target display region as an image region to be displayed; and taking the target uploaded image of the image region to be displayed as the effect superimposed image, and adjusting a transparency value of the effect superimposed image to a target transparency value, so as to display the effect superimposed image on the display interface.

Here the track region can be understood as the region where the contact motion track and the target display region coincide. The track region may also be understood as the image region to be displayed. The effect superimposed image is part of the target uploaded image in the image region to be displayed, which can be understood as that the track region is an erasing region, and the image corresponding to the erasing region in the target uploaded image is taken as the effect superimposed image. The target transparency value can be understood as the transparency value that needs to be adjusted, that is, the pixel corresponding to the effect superimposed image in the target uploaded image is adjusted from the invisible state to the transparency value corresponding to the visible state.

For example, the user can adjust the size of the target display region by adjusting the size of the uploaded image box. After the size of the target display region is determined, the user's finger can move on the display interface, and the track corresponding to the movement operation is taken as the contact motion track. In the process of dabbing, the corresponding effect superimposed image can be determined in real time according to the contact motion track. It can be understood that if the user's finger has been sliding on the display interface, and the corresponding sliding region is the target display region, the content of each frame on the display interface is different, since the determined effect superimposed images are different with different sliding tracks. According to the overlapping region of the contact motion track and the target display region, the image region to be displayed is determined. For example, the track of the contact motion track on the display interface is circular, and the circle coincides with the target display region, so that the target uploaded image corresponding to the circular track is displayed. Alternatively, when the contact motion track is a ring, only the ring region is taken as the image region to be displayed, and only the target uploaded image in the ring region is displayed, that is, the transparency value of the pixel in the ring region is adjusted to the target transparency value.

S230: monitoring a contact motion track of a target contact on a display interface, and processing the target uploaded image based on the contact motion track to determine an effect superimposed image.

S240: taking the effect superimposed image as a foreground image and taking a collected original image as a background image, so as to determine a target effect video.

For example, Fig. 4 is a schematic diagram of a current display interface provided by another embodiment of the present disclosure. As shown in Fig. 4, when the user's finger motion track on the display interface corresponds to a heart-shaped region and the heart-shaped region corresponds to the target display region, the transparency of the target uploaded image in the heart-shaped region can be adjusted from an invisible state to a visible state to obtain the effect superimposed image. The processed effect superimposed image is displayed as the foreground image in the upper image layer of the effect video, and the collected original image is displayed as the background image in the lower image layer of the effect video, thereby obtaining the target effect video.

The technical solution of the embodiments of the present disclosure obtains a target uploaded image in response to an effect trigger operation, monitors a contact motion track of a target contact on a display interface according to a preset method, processes the target uploaded image based on the contact motion track to determine an effect superimposed image, and takes the effect superimposed image as a foreground image and takes a collected original image as a background image after the effect superimposed image is determined, so as to determine a target effect video. Thus, the corresponding effect image can be displayed according to the user's operation, and the richness of the image display content and the interactivity with the user can be improved.

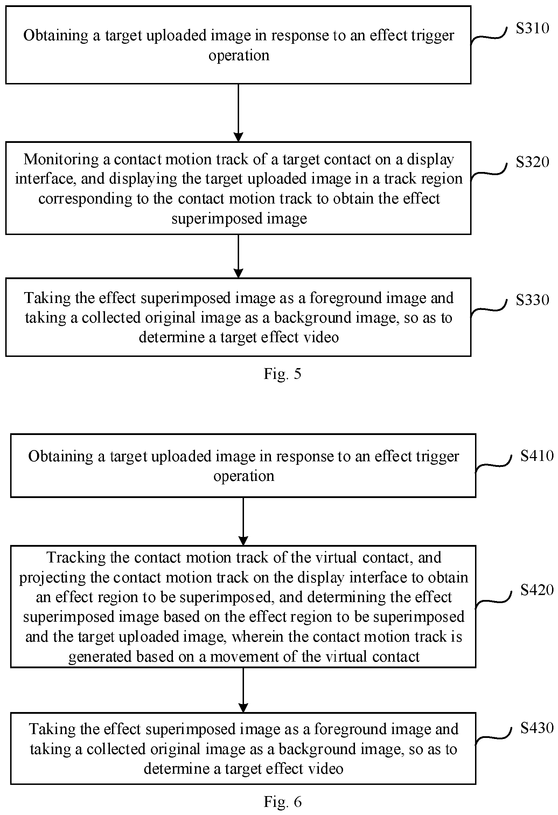

Fig. 5 is a flowchart of an effect video generating method provided by still another embodiment of the present disclosure. On the basis of the aforementioned embodiments, the corresponding target uploaded image can be subjected to effect processing according to the contact motion track, so as to obtain the effect superimposed image. It should be noted that this embodiment is described by taking the contact being the physical contact as an example, and its implementation can be with reference to the technical solution of this embodiment. Technical terms that are the same as or corresponding to those in the above embodiments are not repeated here.

As shown in Fig. 5, the method includes the following steps:
S310: obtaining a target uploaded image in response to an effect trigger operation.
S320: monitoring a contact motion track of a target contact on a display interface, and displaying the target uploaded image in a track region corresponding to the contact motion track to obtain the effect superimposed image.

For example, after the target uploaded image is determined, the motion track of the target contact on the display interface can be obtained in real time, that is, the contact motion track, and the target uploaded image can be displayed in the corresponding display region according to the contact motion track. The track region may be with a certain width corresponding to the contact motion track, and the target uploaded image can be displayed in the corresponding track region. It can be understood that the movement information of the target contact on the display interface is obtained in real time, the target uploaded image is compressed according to the movement information, and the compressed image is displayed in the corresponding track region. If the contact motion track changes in real time, the processing on the target uploaded image is also real-time, that is, the compression processing is also generated in real time, and the effect superimposed image can be determined based on the above method.

In this technical solution, displaying the target uploaded image in the corresponding track region can include various implementation methods, and the effect superimposed image corresponding to each method is described in detail below: for example, determining a connected domain for displaying the target uploaded image according to the track region, and displaying a significant region in the target uploaded image on the connected domain to obtain the effect superimposed image; compressing the target uploaded image onto the connected domain to obtain the effect superimposed image; or setting corresponding width information for the track region, so as to display the target uploaded image under compression in the track region and obtain the effect superimposed image.

The first way is: according to the contact motion track, the corresponding connected domain information can be determined, and the target uploaded image is displayed in the connected domain. The second way is: usually the display size corresponding to the contact motion track is relatively small, the significant region in the target uploaded image can be determined, and the display region is compressed to be displayed in the connected domain corresponding to the contact motion track, so as to obtain the target effect video. Another way is to set the width information of the contact motion track, determine the corresponding display region based on the width information in the process of dabbing, and compress and display the target uploaded image in the track region in the process of determining the contact motion track.

S330: taking the effect superimposed image as a foreground image and taking a collected original image as a background image, so as to determine a target effect video.

The technical solution of the embodiments of the present disclosure obtains a target uploaded image in response to an effect trigger operation, monitors a contact motion track of a target contact on a display interface according to a preset method, processes the target uploaded image based on the contact motion track to determine an effect superimposed image, and takes the effect superimposed image as a foreground image and takes a collected original image as a background image after the effect superimposed image is determined, so as to determine a target effect video. Thus, the corresponding effect image can be displayed according to the user's operation, and the richness of the image display content and the interactivity with the user can be improved.

Fig. 6 is a flowchart of an effect video generating method provided by further still another embodiment of the present disclosure. On the basis of the aforementioned embodiments, the corresponding target uploaded image can be subjected to effect processing according to the contact motion track, so as to obtain the effect superimposed image. It should be noted that this embodiment is described by taking the contact being the virtual contact as an example, and its implementation can be with reference to the technical solution of this embodiment. Technical terms that are the same as or corresponding to those in the above embodiments are not repeated here.

S410: obtaining a target uploaded image in response to an effect trigger operation.

S420: tracking the contact motion track of the virtual contact, and projecting the contact motion track on the display interface to obtain an effect region to be superimposed, and determining the effect superimposed image based on the effect region to be superimposed and the target uploaded image, wherein the contact motion track is generated based on a movement of the virtual contact.

Here the virtual contact can be understood as the key point information of the target interactive subject in the camera screen, such as the user's palm, so that the key point can be regarded as the virtual contact.

For example, after the target uploaded image is determined, the corresponding target contact can be determined according to the key point information of the target interactive subject in the camera screen. For example, when the user uses the rear lens of the terminal device to shoot a video, the user can customize the region where the target uploaded image needs to be displayed by moving the palm, so that the user's palm can be set as the key point. It can be understood that when the user moves the palm in real time, the palm of the user in the image displayed on the display interface will also move synchronously, and therefore the projected key point on the display interface is taken as the virtual contact, so that the corresponding contact motion track is determined according to the projected motion track on the display interface, and the effect region to be superimposed on the display interface is obtained based on the contact motion track, so that the corresponding effect superimposed image is determined according to the effect region to be superimposed and the target uploaded image.

In this technical solution, based on the effect region to be superimposed and the target uploaded image, it is determined that the effect superimposed image includes various modes, and the effect superimposed image corresponding to each mode is illustrated in detail below: for example, fusing the target uploaded image to the effect region to be superimposed to obtain the effect superimposed image, and adjusting a transparency value of the effect superimposed image to a target transparency value, so as to display the effect superimposed image on the display interface; or displaying the target uploaded image and an image in the effect region to be superimposed to obtain the effect superimposed image.

The first way is to determine the corresponding effect region to be superimposed according to the motion track of the virtual contact, and directly fuse the target uploaded image to all the effect regions to be superimposed, so as to obtain the corresponding effect superimposed image, and adjust the transparency value of the effect superimposed image to the target transparency, thereby displaying the corresponding effect superimposed image on the display interface. The second way is to directly display the target uploaded image and the image in the effect region to be superimposed, so as to obtain the effect superimposed image. It can be understood that, when setting the effect image, the user wants to customize the display of a portion of the content of the target uploaded image, and therefore the content of the effect region to be superimposed which overlaps with the target uploaded image as set by the user is displayed in the set region, so that the corresponding effect superimposed image can be obtained.

S430: taking the effect superimposed image as a foreground image and taking a collected original image as a background image, so as to determine a target effect video.

On the basis of all the above embodiments, the solution further includes: if the contact motion track is an isolated track point, determining a random display region corresponding to the isolated track point, and taking an image corresponding to the random display region in the target uploaded image as the effect superimposed image.

Here the isolated track point can be understood as that the user does not move the physical contact on the real interface, nor does the user set the corresponding contact motion track by moving the virtual contact in the process of video shooting, that is, the isolated track point is an independent point and does not constitute any connected region. The random display region may be a preset default display region.

For example, if the user does not actively set the moving track of the contact in any way, that is, the moving track of the contact is an isolated track point, the image corresponding to the random display region in the target uploaded image is taken as the effect superimposed image based on the preset default display region. It can be understood that, since the user does not set the display mode of the target uploaded image, it is necessary to generate the corresponding effect superimposed image based on the preset mode. For example, the size of the default display region may be preset, and the target uploaded image can be directly displayed in the default display region after detecting that the contact motion track is an isolated track point. Alternatively, after detecting that the contact motion track is an isolated track point, a circle with the radius changing with time can be generated with the isolated track point as the center, so that according to the change of the area of the circle, the target uploaded image is displayed within the corresponding circle region. Alternatively, the display region with the splash-ink painting effect can be randomly generated.

The technical solution of the embodiments of the present disclosure obtains a target uploaded image in response to an effect trigger operation, monitors a contact motion track of a target contact on a display interface according to a preset method, determines the corresponding effect region to be superimposed according to the movement track of the virtual contact, obtains the corresponding effect image based on the effect region to be superimposed and the target uploaded image, so that the corresponding effect image can be displayed according to the operation of the user, thereby improving the richness of the image display content and the interactivity with the user.

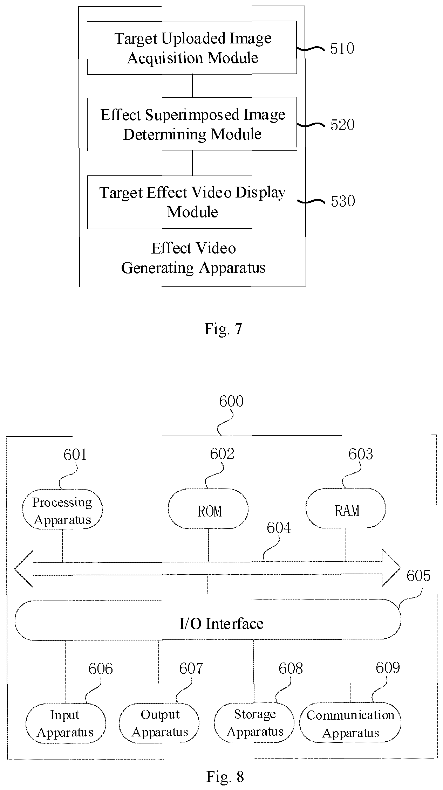

Fig. 7 is a structural block diagram of an effect video generating apparatus provided by an embodiment of the present disclosure, which can execute the effect video generating method provided by any embodiment of the present disclosure and has corresponding functional modules and beneficial effects for executing the method. As illustrated in Fig. 7, the apparatus includes a target uploaded image acquisition module 510, an effect superimposed image determining module 520, and a target effect video display module 530.

The target uploaded image acquisition module 510 is configured to obtain a target uploaded image in response to an effect trigger operation.

The effect superimposed image determining module 520 is configured to monitor a contact motion track of a target contact on a display interface, and process the target uploaded image based on the contact motion track to determine an effect superimposed image.

The target effect video display module 530 is configured to take the effect superimposed image as a foreground image and take a collected original image as a background image, so as to determine a target effect video.

On the basis of the above-described technical solution, the target uploaded image acquisition module is configured to:
display an uploaded image box in response to the effect trigger operation; and
display at least one image to be uploaded based on a trigger operation for the uploaded image box, and determine the target uploaded image based on a trigger operation for the at least one image to be uploaded.

On the basis of the above-described technical solution, the target uploaded image acquisition module further includes:
an image superimposed unit, configured to superimpose the target uploaded image onto a target display region of the display interface, so as to determine the effect superimposed image from the target uploaded image based on the contact motion track.

On the basis of the above-described technical solution, the image superimposed unit is configured to superimpose the target uploaded image onto the target display region of the display interface according to preset transparency.

On the basis of the above-described technical solution, the apparatus further includes:
a contact type determination module, configured to, before monitoring the contact motion track of the target contact on the display interface, determine a contact type of the target contact on the display interface based on a capturing mode, so as to determine the contact motion track on the display interface based on the contact type, wherein the contact type comprises a physical contact type or a virtual contact type.

For example, on the basis of the above-described technical solution, the contact motion track is determined based on a movement of a physical contact, and the effect superimposed image determining module includes:
a contact motion track determination unit, configured to determine the target contact, track movement information of the target contact on the display interface, and determine the contact motion track.

On the basis of the above-described technical solution, the image superimposed unit is further configured to: take a track region corresponding to the contact motion track in the target display region as an image region to be displayed; and take the target uploaded image of the image region to be displayed as the effect superimposed image, and adjust a transparency value of the effect superimposed image to a target transparency value, so as to display the effect superimposed image on the display interface.

On the basis of the above-described technical solution, the effect superimposed image determining module includes:
an effect superimposed image determination unit, configured to display the target uploaded image in a track region corresponding to the contact motion track to obtain the effect superimposed image.

On the basis of the above-described technical solution, the effect superimposed image determination unit is configured to: determine a connected domain for displaying the target uploaded image according to the track region;
display a significant region in the target uploaded image on the connected domain to obtain the effect superimposed image;
compress the target uploaded image onto the connected domain to obtain the effect superimposed image; or
set corresponding width information for the track region, so as to display the target uploaded image under compression in the track region and obtain the effect superimposed image.

For example, on the basis of the above-described technical solution, the contact motion track is generated based on a movement of a virtual contact, and the contact motion track determination unit is further configured to track the contact motion track of the virtual contact, and project the contact motion track on the display interface to obtain an effect region to be superimposed; and
the effect superimposed image determination unit is further configured to determine the effect superimposed image based on the effect region to be superimposed and the target uploaded image.

For example, on the basis of the above-described technical solution, the effect superimposed image determination unit is configured to fuse the target uploaded image to the effect region to be superimposed to obtain the effect superimposed image, and adjust a transparency value of the effect superimposed image to a target transparency value, so as to display the effect superimposed image on the display interface; or
display the target uploaded image and an image in the effect region to be superimposed to obtain the effect superimposed image.

On the basis of the above-described technical solution, the effect superimposed image determination unit is further configured to, in response to determining that the contact motion track is an isolated track point, determine a random display region corresponding to the isolated track point, and take an image corresponding to the random display region in the target uploaded image as the effect superimposed image.

According to the technical solution of the embodiments of the present disclosure, by responding to the effect trigger operation, the target uploaded image is obtained, the contact motion track of the target contact on the display interface is monitored according to the preset method, and the target uploaded image is processed based on the contact motion track to determine the effect superimposed image. After the effect superimposed image is determined, the effect superimposed image is used as the foreground image and the collected original image is used as the background image to determine the target effect video, so that the corresponding effect image can be displayed according to the operation of the user, thereby improving the richness of image display content and the interactivity with the user.

The effect video generating apparatus provided by the embodiments of the present disclosure may execute the effect video generating method provided by any embodiment of the present disclosure, and has corresponding functional modules and beneficial effects for executing the method.

It should be noted that the plurality of units and modules included in the above-described apparatus are only divided according to functional logic, but are not limited to the above-described division, as long as the corresponding functions may be implemented. In addition, specific names of the plurality of functional units are only intended to facilitate distinguishing them from each other, and are not used to limit the protection scope of the embodiments of the present disclosure.

Fig. 8 is a schematic structural diagram of an electronic device provided by an embodiment of the present disclosure. Hereinafter, referring to Fig. 8, it shows a schematic structural diagram of an electronic device (e.g., a terminal device or a server in Fig. 8) 600 suitable for implementing the embodiments of the present disclosure. The terminal device in the embodiments of the present disclosure may include, but not limited to, mobile terminals, such as a mobile phone, a notebook computer, a digital broadcasting receiver, a personal digital assistant (PDA), a portable Android device (PAD), a portable media player (PMP), a vehicle-mounted terminal (e.g., a vehicle-mounted navigation terminal), etc., and fixed terminals, such as a digital television (TV), a desktop computer, etc. The electronic device shown in Fig. 8 is merely an example and should not impose any limitations on the functions and scope of use of the embodiments of the present disclosure.

As illustrated in Fig. 8, the electronic device 600 may include a processing apparatus 601 (e.g., a central processing unit, a graphics processing unit, etc.), which may execute various appropriate actions and processing according to a program stored on a read-only memory (ROM) 602 or a program loaded from a storage apparatus 608 into a random access memory (RAM) 603. The RAM 603 further stores various programs and data required for operation of the electronic device 600. The processing apparatus 601, the ROM 602, and the RAM 603 are connected with each other through a bus 604. An input/output (I/O) interface 605 is also connected to the bus 604.

Usually, apparatuses below may be connected to the I/O interface 605: an input apparatus 606 including, for example, a touch screen, a touch pad, a keyboard, a mouse, a camera, a microphone, an accelerometer, a gyroscope, or the like; an output apparatus 607 including, for example, a liquid crystal display (LCD), a speaker, a vibrator, or the like; a storage apparatus 608 including, for example, a magnetic tape, a hard disk, or the like; and a communication apparatus 609. The communication apparatus 609 may allow the electronic device 600 to perform wireless or wired communication with other electronic devices so as to exchange data. Although Fig. 8 shows the electronic device 600 having various apparatuses, it should be understood that it is not required to implement or have all the apparatuses illustrated, and the electronic device may alternatively implement or have more or fewer apparatuses.

According to the embodiments of the present disclosure, the process described above with reference to the flowchart may be implemented as computer software programs. For example, the embodiments of the present disclosure include a computer program product, including a computer program carried on a non-transitory computer-readable medium, and the computer program includes program codes for executing the method shown in the flowchart. In such embodiments, the computer program may be downloaded and installed from the network via the communication apparatus 609, or installed from the storage apparatus 608, or installed from the ROM 602. When executed by the processing apparatus 601, the computer program may implement the above functions defined in the method provided by the embodiments of the present disclosure.

The names of messages or information exchanged between multiple apparatuses in the implementations of the present disclosure are only for illustrative purposes, and are not intended to limit the scope of these messages or information.

The electronic device provided by the embodiments of the present disclosure belongs to the same disclosed concept as the effect video generating method provided by the above-described embodiments. The technical details which are not described in detail in this embodiment may refer to the above-described embodiments, and this embodiment has the same advantageous effects as the above-described embodiments.

The embodiments of the present disclosure provide a computer storage medium, a computer program is stored on the computer storage medium, and the program, when executed by a processor, is configured to implement the effect video generating method provided by the above-described embodiments.

It should be noted that the computer-readable medium described in the present disclosure may be a computer-readable signal medium or a computer-readable storage medium, or any combination thereof. The computer-readable storage medium may be, but not limited to, an electric, magnetic, optical, electromagnetic, infrared, or semiconductor system, apparatus or device, or any combination thereof. For example, the computer-readable storage medium may include, but not limited to, an electrical connection with one or more wires, a portable computer disk, a hard disk, a random access memory (RAM), a read-only memory (ROM), an erasable programmable read-only memory (EPROM or flash memory), an optical fiber, a compact disk read-only memory (CD-ROM), an optical storage device, a magnetic storage device, or any appropriate combination of them. In the present disclosure, the computer-readable storage medium may be any tangible medium containing or storing a program that can be used by or in combination with an instruction execution system, apparatus or device. In the present disclosure, the computer-readable signal medium may include a data signal that propagates in a baseband or as a part of a carrier and carries computer-readable program codes. The data signal propagating in such a manner may take a plurality of forms, including but not limited to, an electromagnetic signal, an optical signal, or any appropriate combination thereof. The computer-readable signal medium may also be any other computer-readable medium than the computer-readable storage medium. The computer-readable signal medium may send, propagate or transmit a program used by or in combination with an instruction execution system, apparatus or device. The program codes contained on the computer-readable medium may be transmitted by using any suitable medium, including but not limited to, an electric wire, a fiber-optic cable, radio frequency (RF) and the like, or any appropriate combination of them.

In some implementations, the client and the server may communicate with any network protocol currently known or to be researched and developed in the future such as hypertext transfer protocol (HTTP), and may communicate (for example, via a communication network) and interconnect with digital data in any form or medium. Examples of communication networks include a local area network (LAN), a wide area network (WAN), the Internet, and an end-to-end network (e.g., an ad hoc end-to-end network), as well as any network currently known or to be researched and developed in the future.

The above-described computer-readable medium may be included in the above-described electronic device, or may also exist alone without being assembled into the electronic device.

The above-mentioned computer-readable medium carries one or more programs, and the one or more programs, when executed by the electronic device, cause the electronic device to:
obtain a target uploaded image in response to an effect trigger operation;
monitor a contact motion track of a target contact on a display interface, and process the target uploaded image based on the contact motion track to determine an effect superimposed image; and
take the effect superimposed image as a foreground image and take a collected original image as a background image, so as to determine a target effect video.

The computer program codes for performing the operations of the present disclosure may be written in one or more programming languages or a combination thereof. The above-described programming languages include but are not limited to object-oriented programming languages, such as Java, Smalltalk, C++, and also include conventional procedural programming languages, such as the "C" programming language or similar programming languages. The program codes may by executed entirely on the user's computer, partly on the user's computer, as a stand-alone software package, partly on the user's computer and partly on a remote computer, or entirely on the remote computer or server. In the scenario related to the remote computer, the remote computer may be connected to the user's computer through any type of network, including a local area network (LAN) or a wide area network (WAN), or the connection may be made to an external computer (for example, through the Internet using an Internet service provider).

The flow chart and block diagrams in the accompanying drawings illustrate the architecture, functionality, and operation of possible implementations of systems, methods, and computer program products according to various embodiments of the present disclosure. In this regard, each block in the flowcharts or block diagrams may represent a module, a program segment, or a portion of codes, including one or more executable instructions for implementing specified logical functions. It should also be noted that, in some alternative implementations, the functions noted in the blocks may also occur out of the order noted in the accompanying drawings. For example, two blocks shown in succession may, in fact, can be executed substantially concurrently, or the two blocks may sometimes be executed in a reverse order, depending upon the functionality involved. It should also be noted that, each block of the block diagrams and/or flowcharts, and combinations of blocks in the block diagrams and/or flowcharts, may be implemented by a dedicated hardware-based system that performs the specified functions or operations, or may also be implemented by a combination of dedicated hardware and computer instructions.

The units involved in the embodiments of the present disclosure may be implemented in software or hardware. Here the name of the unit does not constitute a limitation of the unit itself under certain circumstances. For example, the first acquiring unit may also be described as "a unit that acquires at least two Internet protocol addresses."

The functions described herein above may be performed, at least partially, by one or more hardware logic components. For example, without limitation, available exemplary types of hardware logic components include: a field programmable gate array (FPGA), an application specific integrated circuit (ASIC), application specific standard parts (ASSP), a system on chip (SOC), a complex programmable logical device (CPLD), etc.

In the context of the present disclosure, the machine-readable medium may be a tangible medium containing or storing a program that can be used by or in combination with an instruction execution system, apparatus or device. The machine-readable medium may be a machine-readable signal medium or a machine-readable storage medium. The machine-readable medium may include, but not limited to, an electric, magnetic, optical, electromagnetic, infrared, or semiconductor system, apparatus or device, or any appropriate combination thereof. Examples of the machine-readable storage medium may include: an electrical connection based on one or more wires, a portable computer disk, a hard disk, a random access memory (RAM), a read-only memory (ROM), an erasable programmable read-only memory (EPROM or flash memory), an optical fiber, a compact disk read-only memory (CD-ROM), an optical storage device, a magnetic storage device, or any appropriate combination of them.

According to one or more embodiments of the present disclosure, Example 1 provides an effect video generating method, and the method includes:
obtaining a target uploaded image in response to an effect trigger operation;
monitoring a contact motion track of a target contact on a display interface, and processing the target uploaded image based on the contact motion track to determine an effect superimposed image; and
taking the effect superimposed image as a foreground image and taking a collected original image as a background image, so as to determine a target effect video.

According to one or more embodiments of the present disclosure, in the effect video generating method provided by Example 2, obtaining the target uploaded image in response to the effect trigger operation comprises:
displaying an uploaded image box in response to the effect trigger operation; and
displaying at least one image to be uploaded based on a trigger operation for the uploaded image box, and determining the target uploaded image based on a trigger operation for the at least one image to be uploaded.

According to one or more embodiments of the present disclosure, in the effect video generating method provided by Example 3, after obtaining the target uploaded image, the method further comprises:
superimposing the target uploaded image onto a target display region of the display interface, so as to determine the effect superimposed image from the target uploaded image based on the contact motion track.

According to one or more embodiments of the present disclosure, in the effect video generating method provided by Example 4, superimposing the target uploaded image onto the target display region of the display interface comprises:
superimposing the target uploaded image onto the target display region of the display interface according to preset transparency.

According to one or more embodiments of the present disclosure, in the effect video generating method provided by Example 5, before monitoring the contact motion track of the target contact on the display interface, the method further comprises:
determining a contact type of the target contact on the display interface based on a capturing mode, so as to determine the contact motion track on the display interface based on the contact type, wherein the contact type comprises a physical contact type or a virtual contact type.

According to one or more embodiments of the present disclosure, in the effect video generating method provided by Example 6, the contact motion track is determined based on a movement of a physical contact, and monitoring the contact motion track of the target contact on the display interface comprises:
determining the target contact, and
tracking movement information of the target contact on the display interface, and determining the contact motion track.

According to one or more embodiments of the present disclosure, in the effect video generating method provided by Example 7, processing the target uploaded image based on the contact motion track to determine the effect superimposed image comprises:
taking a track region corresponding to the contact motion track in the target display region as an image region to be displayed; and
taking the target uploaded image of the image region to be displayed as the effect superimposed image, and adjusting a transparency value of the effect superimposed image to a target transparency value, so as to display the effect superimposed image on the display interface.

According to one or more embodiments of the present disclosure, in the effect video generating method provided by Example 8, processing the target uploaded image based on the contact motion track to determine the effect superimposed image comprises:
displaying the target uploaded image in a track region corresponding to the contact motion track to obtain the effect superimposed image.

According to one or more embodiments of the present disclosure, in the effect video generating method provided by Example 9, displaying the target uploaded image in the track region corresponding to the contact motion track to obtain the effect superimposed image comprises one of:
determining a connected domain for displaying the target uploaded image according to the track region, and displaying a significant region in the target uploaded image on the connected domain to obtain the effect superimposed image;
compressing the target uploaded image onto the connected domain to obtain the effect superimposed image; or
setting corresponding width information for the track region, so as to display the target uploaded image under compression in the track region and obtain the effect superimposed image.

According to one or more embodiments of the present disclosure, in the effect video generating method provided by Example 10, the contact motion track is generated based on a movement of a virtual contact; and monitoring the contact motion track of the target contact on the display interface and processing the target uploaded image based on the contact motion track to determine the effect superimposed image comprises:
tracking the contact motion track of the virtual contact, and projecting the contact motion track on the display interface to obtain an effect region to be superimposed, and
determining the effect superimposed image based on the effect region to be superimposed and the target uploaded image.

According to one or more embodiments of the present disclosure, in the effect video generating method provided by Example 11, determining the effect superimposed image based on the effect region to be superimposed and the target uploaded image comprises:
fusing the target uploaded image to the effect region to be superimposed to obtain the effect superimposed image, and adjusting a transparency value of the effect superimposed image to a target transparency value, so as to display the effect superimposed image on the display interface; or
displaying the target uploaded image and an image in the effect region to be superimposed to obtain the effect superimposed image.

According to one or more embodiments of the present disclosure, the effect video generating method provided by Example 12 further comprises:
in response to determining that the contact motion track is an isolated track point, determining a random display region corresponding to the isolated track point, and taking an image corresponding to the random display region in the target uploaded image as the effect superimposed image.

According to one or more embodiments of the present disclosure, Example 13 provides an effect video generating apparatus, and the apparatus includes:
a target uploaded image acquisition module, configured to obtain a target uploaded image in response to an effect trigger operation;
an effect superimposed image determining module, configured to monitor a contact motion track of a target contact on a display interface, and process the target uploaded image based on the contact motion track to determine an effect superimposed image; and
a target effect video display module, configured to take the effect superimposed image as a foreground image and take a collected original image as a background image, so as to determine a target effect video.

In addition, although the plurality of operations are described in a particular order, this should not be understood as requiring the operations to be executed in the particular order shown or in a sequential order. Under certain circumstances, multitasking and parallel processing may be favorable. Similarly, although the above discussion includes a number of specific implementation details, these should not be interpreted as limiting the scope of the present disclosure. Certain features as described in the context of separate embodiments may also be implemented in a single embodiment in combination. Conversely, various features as described in the context of a single embodiment may also be implemented in a plurality of embodiments individually or in any suitable subcombination.

## Claims

1. An effect video generating method, comprising:
obtaining a target uploaded image in response to an effect trigger operation;
monitoring a contact motion track of a target contact on a display interface, and processing the target uploaded image based on the contact motion track to determine an effect superimposed image; and
taking the effect superimposed image as a foreground image and taking a collected original image as a background image, so as to determine a target effect video.

2. The method according to claim 1, wherein obtaining the target uploaded image in response to the effect trigger operation comprises:
displaying an uploaded image box in response to the effect trigger operation; and
displaying at least one image to be uploaded based on a trigger operation for the uploaded image box, and determining the target uploaded image based on a trigger operation for the at least one image to be uploaded.

3. The method according to claim 1, wherein, after obtaining the target uploaded image, the method further comprises:
superimposing the target uploaded image onto a target display region of the display interface, so as to determine the effect superimposed image from the target uploaded image based on the contact motion track.

4. The method according to claim 3, wherein superimposing the target uploaded image onto the target display region of the display interface comprises:
superimposing the target uploaded image onto the target display region of the display interface according to preset transparency.

5. The method according to claim 1, wherein, before monitoring the contact motion track of the target contact on the display interface, the method further comprises:
determining a contact type of the target contact on the display interface based on a capturing mode, so as to determine the contact motion track on the display interface based on the contact type, wherein the contact type comprises a physical contact type or a virtual contact type.

6. The method according to claim 5, wherein the contact motion track is determined based on a movement of a physical contact, and monitoring the contact motion track of the target contact on the display interface comprises:
determining the target contact, and
tracking movement information of the target contact on the display interface, and determining the contact motion track.

7. The method according to claim 4, wherein processing the target uploaded image based on the contact motion track to determine the effect superimposed image comprises:
taking a track region corresponding to the contact motion track in the target display region as an image region to be displayed; and
taking the target uploaded image of the image region to be displayed as the effect superimposed image, and adjusting a transparency value of the effect superimposed image to a target transparency value, so as to display the effect superimposed image on the display interface.

8. The method according to claim 1, wherein processing the target uploaded image based on the contact motion track to determine the effect superimposed image comprises:
displaying the target uploaded image in a track region corresponding to the contact motion track to obtain the effect superimposed image.

9. The method according to claim 8, wherein displaying the target uploaded image in the track region corresponding to the contact motion track to obtain the effect superimposed image comprises one of:
determining a connected domain for displaying the target uploaded image according to the track region, and displaying a significant region in the target uploaded image on the connected domain to obtain the effect superimposed image;
compressing the target uploaded image onto the connected domain to obtain the effect superimposed image; or
setting corresponding width information for the track region, so as to display the target uploaded image under compression in the track region and obtain the effect superimposed image.

10. The method according to claim 4, wherein the contact motion track is generated based on a movement of a virtual contact; and
monitoring the contact motion track of the target contact on the display interface and processing the target uploaded image based on the contact motion track to determine the effect superimposed image comprises:
tracking the contact motion track of the virtual contact, and projecting the contact motion track on the display interface to obtain an effect region to be superimposed, and
determining the effect superimposed image based on the effect region to be superimposed and the target uploaded image.

11. The method according to claim 10, wherein determining the effect superimposed image based on the effect region to be superimposed and the target uploaded image comprises:
fusing the target uploaded image to the effect region to be superimposed to obtain the effect superimposed image, and adjusting a transparency value of the effect superimposed image to a target transparency value, so as to display the effect superimposed image on the display interface; or
displaying the target uploaded image and an image in the effect region to be superimposed to obtain the effect superimposed image.

12. The method according to claim 1, further comprising:
in response to determining that the contact motion track is an isolated track point, determining a random display region corresponding to the isolated track point, and taking an image corresponding to the random display region in the target uploaded image as the effect superimposed image.

13. An effect video generating apparatus, comprising:
a target uploaded image acquisition module, configured to obtain a target uploaded image in response to an effect trigger operation;
an effect superimposed image determining module, configured to monitor a contact motion track of a target contact on a display interface, and process the target uploaded image based on the contact motion track to determine an effect superimposed image; and
a target effect video display module, configured to take the effect superimposed image as a foreground image and take a collected original image as a background image, so as to determine a target effect video.

14. An electronic device, comprising:
one or more processors; and
a storage apparatus, configured to store one or more programs,
wherein the one or more programs, when executed by the one or more processors, cause the one or more processors to implement the effect video generating method according to any one of claims 1 to 12.

15. A storage medium comprising computer-executable instructions, wherein the computer-executable instructions, when executed by a computer processor, are configured to execute the effect video generating method according to any one of claims 1 to 12.
